# FASCICULE DE BREVET EUROPEEN

(11) **EP 2 771 976 B1**
(45) Date de publication et mention de la délivrance du brevet: **23.01.2019**
(21) Numéro de dépôt: 12777920.5
(22) Date de dépôt: 25.10.2012
(51) Int. Cl.: G06F 21/83, G06F 3/02, G06F 3/023, H03M 11/02, H03M 11/04, H03M 11/20, H03M 11/00

(54) **PROCEDE ET DISPOSITIF DE GESTION D'UNE MATRICE DE TOUCHES, PRODUIT PROGRAMME D'ORDINATEUR ET MOYEN DE STOCKAGE CORRESPONDANTS**
VERFAHREN UND VORRICHTUNG ZUR VERWALTUNG EINER SCHLÜSSELMATRIX, ENTSPRECHENDES COMPUTERPROGRAMMPRODUKT UND SPEICHERMITTEL
METHOD AND DEVICE FOR MANAGING A KEY MATRIX, CORRESPONDING COMPUTER PROGRAM PRODUCT AND STORAGE MEANS

(30) Priorité: 28.10.2011 FR 1159798
(43) Date de publication de la demande: 03.09.2014
(73) Titulaire: Ingenico Group, 75015 Paris (FR)
(72) Inventeur: BELLAHCENE, Mohammed, F-69003 Lyon (FR); BENOIT, Olivier, San Diego CA92122 (US); DELORME, Jean-Jacques, F-26320 Saint-Marcel-Les-Valence (FR)
(74) Mandataire: Vidon Brevets & Stratégie
(86) Numéro de dépôt international: PCT/EP2012/071189
(87) Numéro de publication internationale: WO 2013/060801

(56) Documents cités:
- EP-A- 0 248 712
- US-A- 6 054 940
- US-A1- 2001 014 944
- US-A1- 2010 026 529

## Description

### 1. DOMAINE DE L'INVENTION

Le domaine de l'invention est celui des claviers matriciels, c'est-à-dire des claviers comprenant une matrice de touches permettant à un utilisateur de saisir des caractères (lettres, chiffres, symboles...).

Plus précisément, l'invention concerne une technique de gestion sécurisée d'une telle matrice de touches par un dispositif (par exemple un processeur), afin déterminer la ou les touches pressées par l'utilisateur. Cette technique est aussi appelée « routine de balayage clavier » (ou « keyboard scan routine » en anglais).

L'invention s'applique notamment, mais non exclusivement, au clavier d'un terminal de paiement permettant le règlement d'achats de biens et de services. Le clavier permet dans ce cas la saisie des montants des transactions par le vendeur, ainsi que la saisie des codes confidentiels (codes PIN, pour « Personal Identity Number » en anglais) par les clients.

L'invention n'est pas limitée à un type particulier de clavier et s'applique quels que soient le nombre et la nature des touches du clavier (touches numériques, touches de fonction...).

### 2. ARRIÈRE-PLAN TECHNOLOGIQUE

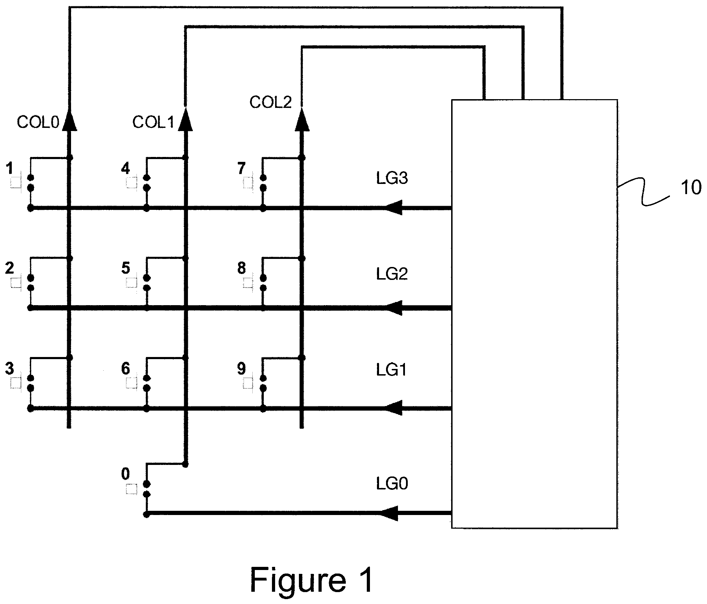

La **figure 1** présente un exemple de clavier numérique comprenant une matrice de touches reliée à un processeur 10. Dans cet exemple, la matrice de touches comprend dix touches (associées aux chiffres 0 à 9), quatre lignes (référencées LG0 à LG3) et trois colonnes (référencées COLO à COL2). Chaque touche permet, quand elle est pressée, de court-circuiter une ligne et une colonne de la matrice. Par exemple, la touche associée au chiffre 6 permet, quand elle est pressée, de court-circuiter la ligne LG1 et la colonne COL1.

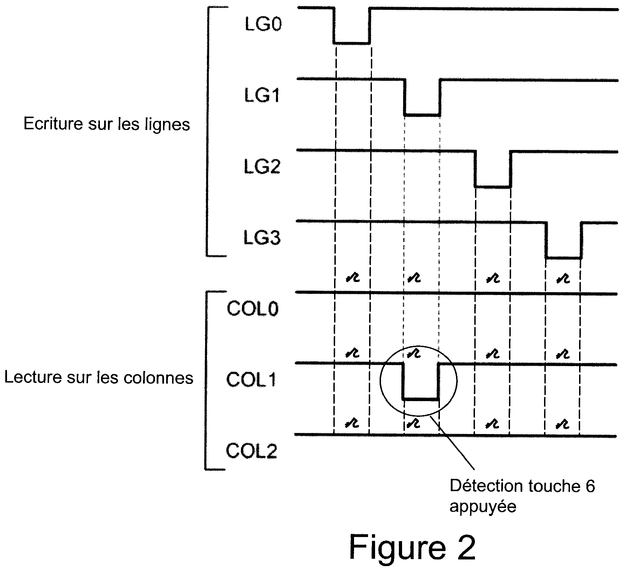

La technique classique de gestion d'une matrice de touches consiste, pour le processeur 10, à effectuer plusieurs itérations successives d'une phase de balayage. Comme illustré sur la **figure 2**, chaque itération de la phase de balayage comprend les étapes suivantes, pour chacune des lignes LG0 à LG3 traitées successivement :
- écriture d'une valeur logique prédéterminée (niveau logique « 0 » dans l'exemple de la figure 2) sur la ligne ; et
- pour chaque colonne COL0 à COL2, lecture (symbolisée par la lettre « r » sur la figure 2) d'une valeur logique sur la colonne pour déterminer si la colonne est en court-circuit avec la ligne, par comparaison entre la valeur logique lue et la valeur logique prédéterminée.

En d'autres termes, quand il exécute une itération de la phase de balayage, le processeur écrit sur les lignes une par une, et lit sur les colonnes simultanément. Le processeur peut ainsi détecter qu'une unique touche a été pressée ou bien que plusieurs touches ont été pressées simultanément.

Dans l'exemple de la figure 2 et dans la suite de la description, l'écriture sur les lignes et la lecture sur les colonnes sont effectuées sur un niveau logique « 0 », en supposant que les lignes et les colonnes sont par défaut à la valeur logique « 1 ». Il est clair cependant que le principe reste le même si on inverse l'utilisation des niveaux logiques « 0 » et « 1 » (c'est-à-dire si l'écriture sur les lignes et la lecture sur les colonnes sont effectuées sur le niveau logique « 1 », en supposant que les lignes et les colonnes sont par défaut à la valeur logique « 0 »).

On considère que la formulation ci-dessus, qui est basée sur une matrice de touches (matrice M) et les notions d'écritures successives sur les lignes de cette matrice M et de lectures simultanées sur les colonnes de cette matrice M, est générique. En effet, il existe une alternative consistant à écrire successivement sur les colonnes de cette matrice M et à lire simultanément sur les lignes de cette matrice M. Mais cette alternative peut être traitée selon la formulation précédente, si l'on considère une nouvelle matrice M' dans laquelle les lignes correspondent aux colonnes de la matrice M et les colonnes correspondent aux lignes de la matrice M.

Dans l'exemple de la figure 2, on suppose que la touche 6 est pressée. Le processeur détecte donc un court-circuit entre la ligne LG1 et la colonne COL1, et en déduit que la touche 6 située à l'intersection entre cette ligne LG1 et cette colonne COL1 a été pressée.

Il existe un besoin de sécuriser la technique classique de gestion d'une matrice de touches (c'est-à-dire la routine classique de balayage clavier).

Cette problématique est évoquée dans le document de brevet FR2599525, qui indique qu'il existe un risque que des personnes malveillantes tentent d'intercepter un code confidentiel au moment où il passe du clavier à des moyens propres à l'analyse matricielle du clavier, par ligne et colonne. Dans la suite de la description, ces moyens sont aussi appelés dispositif de gestion de la matrice de touches, ou encore processeur. Le document FR2599525 précise que la connaissance de la forme d'onde des signaux d'analyse du clavier permet à un dispositif espion de remonter immédiatement à toute information confidentielle frappée sur le clavier. Il suffit, pour espionner le clavier, de quelques branchements (par sondes) sur les lignes et colonnes de la matrice de touches du clavier. L'espionnage des signaux présents sur les lignes et les colonnes de la matrice peut également être effectué par analyse des rayonnements électromagnétiques (ou EMA, pour « ElectroMagnetic Analysis » en anglais). Par contre, on suppose que les signaux circulant à l'intérieur du dispositif de gestion de la matrice de touches sont relativement complexes, ce qui rend difficile leur utilisation pour retrouver l'information confidentielle frappée au clavier. De ce fait, le dispositif de gestion de la matrice de touches est appelé « module protégé » dans le document FR2599525.

Afin d'améliorer la sécurité du clavier, le document FR2599525 propose une implémentation, par le dispositif de gestion de la matrice de touches (« module protégé »), de contre-mesures visant à entraver la possibilité d'interception de toute information confidentielle frappée sur le clavier (code confidentiel par exemple) par espionnage de l'état des lignes et colonnes de la matrice de touches du clavier.

Plus précisément, la technique proposée par le document FR2599525 combine :
- un premier mécanisme de simulation : le module protégé est muni de liaisons bidirectionnelles vers certaines au moins des colonnes et lignes du clavier, et le module protégé comporte des moyens pour simuler de faux actionnements de touches, certaines au moins des impulsions d'interrogation étant appliquées en même temps à au moins une ligne et au moins une colonne ;
- un mécanisme de vraie exploration du clavier : le module protégé explore le clavier touche par touche, en scrutant à chaque fois une ligne ou une colonne dite « effectivement analysée », qui ne reçoit pas l'impulsion d'interrogation (en provenance du module protégé). Lors de cette vraie exploration, il est également proposé une simulation complémentaire lorsque le module protégé se trouve en présence d'un non transfert du début de l'impulsion d'interrogation sur la colonne ou ligne analysée (c'est-à-dire non actionnement d'une ou plusieurs touches explorées) : le module protégé répond alors à cette condition en appliquant à la colonne ou ligne analysée une impulsion factice qui se termine avec l'impulsion d'interrogation (son début étant par contre légèrement retardé par rapport au début de l'impulsion d'interrogation, compte tenu du temps de décision nécessaire au module protégé) ;
- un second mécanisme de simulation : le module protégé n'effectue aucune vraie interrogation d'une touche choisie, pendant un temps prédéterminé correspondant au temps normal d'actionnement d'une touche, et il engendre pendant le même temps une fausse réponse attribuable à cette touche choisie.

Deux modes de réalisation de ces mécanismes sont proposés.

Dans le premier mode de réalisation, le module protégé est muni de liaisons bidirectionnelles vers toutes les colonnes du clavier :
- pour le premier mécanisme de simulation, le module protégé possède un état de simulation pure dans lequel il applique l'impulsion d'interrogation à une ligne et à toutes les colonnes du clavier ;
- pour le mécanisme de vraie exploration du clavier (touche par touche), le module protégé applique l'impulsion d'interrogation à une ligne et à toutes les colonnes sauf une colonne analysée, la touche effectivement explorée étant définie par la ligne interrogée et la colonne analysée.

Dans le second mode de réalisation, le module protégé est muni de liaisons bidirectionnelles vers toutes les lignes et toutes les colonnes du clavier :
- pour le premier mécanisme de simulation, le module protégé possède un état de simulation pure dans lequel il applique l'impulsion d'interrogation à toutes les lignes et toutes les colonnes du clavier ;
- pour le mécanisme de vraie exploration du clavier (touche par touche), le module protégé applique l'impulsion d'interrogation d'une part à toutes les lignes et colonnes sauf une ligne analysée, d'autre part à toutes les lignes et colonnes sauf une colonne analysée, la touche effectivement explorée étant définie par la ligne et la colonne analysées.

Si elle permet d'améliorer la sécurité du clavier, la technique du document FR2599525 n'est cependant pas optimale. En effet, la durée et les ressources de calcul nécessaires à l'exécution du mécanisme de vraie exploration du clavier ne sont pas optimisées, puisqu'il s'agit d'une exploration touche par touche.

On notera que le second mode de réalisation est encore plus coûteux en temps et en ressources de calcul que le premier mode de réalisation, puisque l'exploration de chaque touche se fait en deux temps, d'abord par la ligne à laquelle appartient la touche explorée, ensuite par la colonne à laquelle appartient cette même touche explorée. Il faut donc générer plus de séquences de signaux d'interrogation dans une même durée, afin de ne pas perdre d'informations sur l'état réel du clavier.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de gestion sécurisée, par un dispositif (par exemple un processeur), d'une matrice de touches d'un clavier.

Au moins un mode de réalisation de l'invention a également pour objectif de fournir une telle technique permettant une exploration du clavier plus rapide que la technique connue du document FR2599525 discutée ci-dessus.

Au moins un mode de réalisation de l'invention a également pour objectif de fournir une telle technique permettant une exploration du clavier nécessitant moins de ressources de calcul que la technique connue du document FR2599525 discutée ci-dessus.

Un autre objectif d'au moins un mode de réalisation de l'invention est de fournir une telle technique qui soit simple à mettre en oeuvre et peu coûteuse.

Un autre objectif de l'invention est de complexifier pour un attaquant l'analyse des signaux.

Un autre objectif de l'invention est de réduire la fréquence d'apparition du signal résiduel permettant de retrouver la vraie touche appuyée (réduction à l'apparition et à la disparition de la touche pressée).

### 4. EXPOSÉ DE L'INVENTION

L'invention est définie par les revendications indépendantes 1,7,8 et 9. Des modes de réalisation sont définis par les revendications dépendantes 2-6. un mode de réalisation particulier de l'invention, il est proposé un procédé de gestion, par un dispositif, d'une matrice de touches comprenant au moins une ligne et au moins deux colonnes, chaque touche permettant, quand elle est pressée, de court-circuiter une ligne et une colonne de ladite matrice, le procédé comprenant au moins une itération d'une phase de balayage comprenant les étapes suivantes pour chacune des lignes traitées successivement : écriture d'une valeur logique prédéterminée sur la ligne ; et pour chaque colonne, lecture d'une valeur logique sur la colonne pour déterminer si la colonne est en court-circuit avec la ligne, par comparaison entre la valeur logique lue et la valeur logique prédéterminée. Pour chacune des lignes traitées successivement :
- l'étape d'écriture de la valeur logique prédéterminée sur la ligne est effectuée pendant un intervalle de temps prédéterminé ;
- pour chaque colonne, l'étape de lecture d'une valeur logique sur la colonne est effectuée pendant une première partie de l'intervalle de temps prédéterminé ;
- la phase de balayage comprend une étape supplémentaire, pour chaque colonne, d'écriture de la valeur logique prédéterminée sur la colonne, pendant une seconde partie de l'intervalle de temps prédéterminé, la durée de l'intervalle de temps prédéterminé étant égale à la somme des durées des première et seconde parties.

En d'autres termes, pendant ledit intervalle de temps prédéterminé (T), pour chacune desdites colonnes :
* l'étape de lecture d'une valeur logique sur la colonne est effectuée pendant une première partie (T1) dudit intervalle de temps prédéterminé (T) ;
* la phase de balayage comprend une étape supplémentaire d'écriture de la valeur logique prédéterminée sur la colonne, pendant une seconde partie (T2) dudit intervalle de temps prédéterminé (T), la durée dudit intervalle de temps prédéterminé (T) étant égale à la somme des durées des première et seconde parties.

Ainsi, le dispositif (qui gère la matrice de touches du clavier) met en oeuvre une première contre-mesure visant à rendre les signaux présents sur les colonnes aussi indépendants que possible de la ou les touches appuyées, tout en réduisant la durée d'exploration du clavier. Pour cela, pour une ligne donnée sur laquelle il écrit pendant un intervalle de temps T, le dispositif lit et écrit sur chaque colonne : lecture pendant T1 et écriture pendant T2, avec : T1 + T2 = T. Donc, contrairement à la technique connue du document FR2599525 (qui propose une exploration touche par touche), le dispositif de l'invention explore simultanément toutes les touches associées à une même ligne.

Ainsi, si une touche associée à une ligne donnée est appuyée, seul le signal présent sur la colonne associée à cette touche est légèrement différent des signaux présents sur les autres colonnes. Ce signal n'a pas la même valeur que les autres pendant T1, puisqu'il prend la valeur logique prédéterminée écrite sur la ligne donnée. En revanche, il est identique aux autres signaux pendant T2, puisqu'on écrit la valeur logique prédéterminée sur toutes les colonnes. En d'autres termes, au sein d'un intervalle de temps T :
- si aucune touche n'est appuyée, les fronts indiquant le passage à la valeur logique prédéterminée (début de T2) sont synchrones pour toutes les colonnes ;
- si une touche est appuyée, les fronts indiquant le passage à la valeur logique prédéterminée (début de T2) sont synchrones pour toutes les colonnes, sauf pour la colonne associée à la touche appuyée (pour cette colonne, ce front correspond au début de T1, et est donc en avance par rapport aux fronts synchrones des autres colonnes).

On considère que la formulation ci-dessus, qui est basée sur une matrice de touches (matrice M) et les notions d'écritures successives (pendant T) sur chacune des lignes de cette matrice M et de lectures (pendant T1) et écritures (pendant T2) sur chacune des colonnes de cette matrice M, est générique. En effet, il existe une alternative consistant à écriture successivement (pendant T) sur chacune des colonnes de cette matrice M et à lire (pendant T1) et écrire (pendant T2) sur chacune des lignes de cette matrice M. Mais cette alternative peut être traitée selon la formulation précédente, si l'on considère une nouvelle matrice M' dans laquelle les lignes correspondent aux colonnes de la matrice M et les colonnes correspondent aux lignes de la matrice M.

Selon un aspect particulier de l'invention, pour chaque colonne, l'ordre des étapes de lecture et d'écriture pendant l'intervalle de temps prédéterminé est sélectionné de manière aléatoire.

En d'autres termes, pour chaque colonne, le dispositif choisit de manière aléatoire entre : une lecture pendant T1 puis une écriture pendant T2, ou bien une écriture pendant T2 puis une lecture pendant T1.

Ainsi, le dispositif (qui gère la matrice de touches du clavier) met en oeuvre, en combinaison avec la première contre-mesure, une deuxième contre-mesure visant à rendre plus difficile la détection d'une touche appuyée. L'aspect aléatoire permet également d'éviter tout apprentissage par un dispositif espion. En effet, au sein d'un intervalle de temps T :
- si aucune touche n'est appuyée, les fronts indiquant le passage à la valeur logique prédéterminée (début de T2) ne sont pas synchrones pour toutes les colonnes car l'ordre entre lecture et écriture (c'est-à-dire entre T1 et T2) n'est pas le même pour toutes les colonnes ;
- si une touche est appuyée, les fronts indiquant le passage à la valeur logique prédéterminée (début de T2) ne sont pas non plus synchrones pour toutes les colonnes (pour la colonne associée à la touche appuyée, ce front n'est donc pas aisément repérable par simple comparaison avec les fronts synchrones des autres colonnes).

Avantageusement, dans chaque intervalle de temps prédéterminé, la durée de la seconde partie de l'intervalle de temps prédéterminé est identique pour toutes les colonnes.

De cette façon, on augmente la ressemblance entre les signaux présents sur les différentes colonnes, et on rend encore plus difficile la détection d'une touche appuyée.

Selon une caractéristique particulière, la matrice de touches comprend une pluralité de lignes, et en ce que, à chaque itération de la phase de balayage, l'ordre de traitement successif des lignes est aléatoire.

Ainsi, le dispositif (qui gère la matrice de touches du clavier) met en oeuvre une troisième contre-mesure permettant d'augmenter encore la complexité de l'analyse des signaux présents sur les lignes et les colonnes, que doit effectuer un dispositif espion pour déterminer toute information confidentielle frappée sur les touches du clavier.

Selon un aspect particulier de l'invention, la matrice de touches comprend une pluralité de lignes, et en ce que, au cours d'une itération donnée de la phase de balayage, au moins un paramètre varie aléatoirement, d'une ligne à l'autre, ledit au moins paramètre appartenant au groupe comprenant :
- la durée de l'intervalle de temps prédéterminé ;
- la durée de la première partie de l'intervalle de temps prédéterminé ; et
- la durée de la seconde partie de l'intervalle de temps prédéterminé.

Ainsi, le dispositif (qui gère la matrice de touches du clavier) met en oeuvre une quatrième contre-mesure permettant d'augmenter encore la complexité de l'analyse des signaux présents sur les lignes et les colonnes.

Selon une caractéristique particulière, au moins une itération de la phase de balayage, qui suit une itération pendant laquelle au moins un court-circuit a été déterminé entre une colonne donnée et une ligne donnée, comprend les étapes suivantes :
- pour chacune des lignes traitées successivement, autre qu'une ligne donnée en court-circuit avec une colonne donnée :
   * pour chaque colonne, écriture de la valeur logique prédéterminée sur la colonne pendant toute la durée de l'intervalle de temps ;
- pour chaque ligne donnée en court-circuit avec une colonne donnée :
   * pour chaque colonne autre que la colonne donnée, écriture de la valeur logique prédéterminée sur la colonne pendant toute la durée de l'intervalle de temps ; et
   * pour la colonne donnée, lecture d'une valeur logique pendant la première partie de l'intervalle de temps, afin de détecter une poursuite ou un arrêt dudit court-circuit entre la colonne donnée et la ligne donnée, et écriture de la valeur logique prédéterminée pendant la seconde partie de l'intervalle de temps.

Ainsi, le dispositif (qui gère la matrice de touches du clavier) met en oeuvre une cinquième contre-mesure permettant de cacher un appui sur une (ou plusieurs) touche(s). En effet, dès qu'un appui sur une touche a été détecté pendant une itération de la phase de balayage, le comportement du dispositif dans les itérations suivantes de la phase de balayage est tel que, tant que cette touche est appuyée, les signaux présents sur toutes les colonnes sont identiques (valeur logique prédéterminée pendant T). Il n'y a donc que pendant deux itérations (celle de détection de la touche appuyée et celle de détection du relâchement de la touche qu'un dispositif espion peut savoir que la touche a été appuyée. En contrepartie, un appui sur une autre touche ne peut pas être détecté jusqu'à l'itération de détection du relâchement de la touche pressée. Il est également possible de gérer des touches simultanées si elles apparaissent en même temps dans une seule et même phase de détection, ce qui est extrêmement peu probable dans la pratique.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur ou un processeur.

Dans un autre mode de réalisation de l'invention, il est proposé un médium de stockage lisible par ordinateur et non transitoire, stockant un programme d'ordinateur comprenant un jeu d'instructions exécutables par un ordinateur ou un processeur pour mettre en oeuvre le procédé précité (dans l'un quelconque de ses différents modes de réalisation).

Dans un autre mode de réalisation de l'invention, il est proposé un dispositif de gestion d'une matrice de touches comprenant au moins une ligne et au moins deux colonnes, chaque touche permettant, quand elle est pressée, de court-circuiter une ligne et une colonne de ladite matrice, le dispositif comprenant des moyens de balayage adaptés pour effectuer au moins une itération d'une phase de balayage, les moyens de balayage comprenant les moyens suivants, activés pour chacune des lignes traitées successivement : des moyens d'écriture d'une valeur logique prédéterminée sur la ligne ; et des moyens de lecture d'une valeur logique sur chaque colonne pour déterminer si la colonne est en court-circuit avec la ligne, par comparaison entre la valeur logique lue et la valeur logique prédéterminée. Pour chacune des lignes traitées successivement : les moyens d'écriture de la valeur logique prédéterminée sur la ligne sont activés pendant un intervalle de temps prédéterminé ; pour chaque colonne, les moyens de lecture d'une valeur logique sur la colonne sont activés pendant une première partie de l'intervalle de temps prédéterminé. Les moyens de balayage comprennent des moyens supplémentaires d'écriture, activés pour chaque colonne pendant une seconde partie de l'intervalle de temps prédéterminé pour écrire la valeur logique prédéterminée sur la colonne, la durée de l'intervalle de temps prédéterminé étant égale à la somme des durées des première et seconde parties.

En d'autres termes, les moyens de balayage comprennent des moyens supplémentaires d'écriture, et pour chacune des lignes traitées successivement :
- les moyens d'écriture de la valeur logique prédéterminée sur la ligne sont activés pendant un intervalle de temps prédéterminé (T) ;
- pendant ledit intervalle de temps prédéterminé (T), pour chacune desdites colonnes :
   * les moyens de lecture d'une valeur logique sur la colonne sont activés pendant une première partie (T1) dudit intervalle de temps prédéterminé (T);
   * les moyens supplémentaires d'écriture sont activés pendant une seconde partie (T2) dudit intervalle de temps prédéterminé (T), pour écrire la valeur logique prédéterminée sur la colonne, la durée de l'intervalle de temps prédéterminé étant égale à la somme des durées des première et seconde parties.

Avantageusement, le dispositif de gestion de la matrice de touches comprend des moyens de mise en oeuvre des étapes qu'il effectue dans le procédé tel que décrit précédemment, dans l'un quelconque de ses différents modes de réalisation.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un exemple de clavier numérique comprenant une matrice de touches reliée à un processeur ;
- la figure 2, déjà décrite en relation avec l'art antérieur, illustre la technique classique de gestion de la matrice de touches de la figure 1, dans le cas où la touche 6 est appuyée ;
- la figure 3 illustre une première contre-mesure, selon un mode de réalisation particulier de l'invention, dans le cas où la touche 6 est appuyée ;
- les figures 4, 5 et 6 illustrent une combinaison de la première contre-mesure avec une deuxième contre-mesure, selon un mode de réalisation particulier de l'invention (aucune touche appuyée sur la figure 4 ; touche 6 appuyée et détectée dans l'intervalle de temps A, sur la figure 5, et dans l'intervalle de temps C, sur la figure 6) ;
- la figure 7 illustre une troisième contre-mesure, pouvant être combinée avec la première (et l'une quelconque des autres contre-mesures) ;
- la figure 8 illustre une combinaison des première et deuxième contre-mesures avec une quatrième contre-mesure, selon un mode de réalisation particulier de l'invention (aucune touche appuyée) ;
- les figures 9, 10 et 11 illustrent une combinaison des première et deuxième contre-mesures avec une cinquième contre-mesure, selon un mode de réalisation particulier de l'invention (première détection de la touche 6 appuyée, sur la figure 9 ; confirmation de la détection de la touche 6 appuyée, sur la figure 10 ; détection de la touche 6 relâchée, sur la figure 11) ; et
- la figure 12 présente la structure d'un dispositif de gestion d'une matrice de touches d'un clavier, selon un mode de réalisation particulier de l'invention.

### 6. DESCRIPTION DÉTAILLÉE

Dans un souci de simplification, on utilise dans la suite de la description l'exemple de clavier de la figure 1, avec une matrice de touches comprenant dix touches (associées aux chiffres 0 à 9), quatre lignes (référencées LG0 à LG3) et trois colonnes (référencées COLO à COL2). Il est clair que les contre-mesures présentées ci-dessous, selon différents modes de réalisation de l'invention, ne sont pas limitées à cet exemple de clavier.

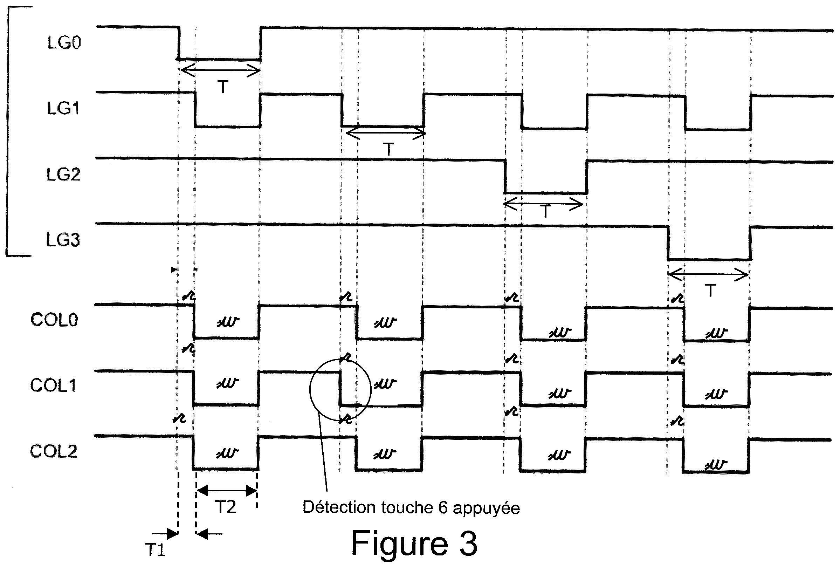

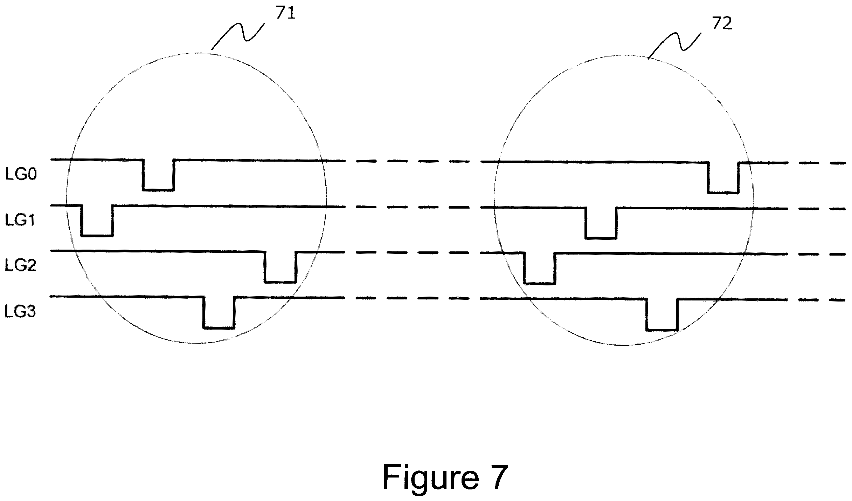

Chacune des figures 3 à 6 et 8 à 11 présente les valeurs logiques présentes sur les lignes LG0 à LG3 et les colonnes COLO à COL2, pendant une itération de la phase de balayage. La figure 7 présente les valeurs logiques présentes sur les lignes LG0 à LG3, pendant deux itérations de la phase de balayage.

On suppose que les impulsions d'interrogation possèdent un niveau logique « 0 ». Il est clair cependant que le principe reste le même si on inverse l'utilisation des niveaux logiques « 0 » et « 1 ».

On présente maintenant, en relation avec la **figure 3**, une première contre-mesure, selon un mode de réalisation particulier de l'invention. On suppose que la touche 6 est appuyée.

Pendant l'intervalle de temps T d'écriture d'une impulsion d'interrogation (niveau logique « 0 ») sur chacune des lignes LG0 à LG3, le processeur effectue les étapes suivantes, pour chaque colonne COL0 à COL2 :
- lecture (symbolisée par la lettre « r » sur la figure 3) d'une valeur logique sur la colonne pendant une première partie T1 de l'intervalle de temps T, pour déterminer si la colonne est en court-circuit avec la ligne (par comparaison entre la valeur logique lue et la valeur logique « 0 ») ;
- écriture (symbolisée par la lettre « w » sur la figure 3) de la valeur logique « 0 » sur la colonne, pendant une seconde partie T2 de l'intervalle de temps T (avec la durée de T égale à la somme des durées de T1 et T2).

Ainsi, dans l'itération de la phase de balayage présentée sur la figure 3, chacune des lignes LG0 à LG3 peut prendre l'un des états suivants :
- en dehors de l'intervalle de temps T, un état « non forcé par le processeur », dans lequel la ligne prend :
   * la valeur logique « 1 » par défaut, si cette ligne n'est pas en court-circuit avec une colonne ; ou
   * la valeur logique d'une colonne donnée, si cette ligne est en court-circuit avec cette colonne donnée (c'est-à-dire si la touche associée à cette ligne et cette colonne est appuyée) ;
- pendant l'intervalle de temps T, un état « forcé par le processeur », dans lequel la ligne prend la valeur logique « 0 » écrite par le processeur.

De même, dans l'itération de la phase de balayage présentée sur la figure 3, chacune des colonnes COL0 à COL2 peut prendre l'un des états suivants :
- en dehors de l'intervalle de temps T, un état « non forcé par le processeur », dans lequel la colonne prend la valeur logique « 1 » par défaut ;
- pendant la première partie T1 de l'intervalle de temps T, un état « non forcé par le processeur » (le processeur lit cette colonne), dans lequel la colonne prend :
   - la valeur logique « 1 » par défaut, si cette colonne n'est pas en court-circuit avec une ligne sur laquelle le processeur a écrit la valeur « 0 » ; ou
   - la valeur logique « 0 », si cette colonne est en court-circuit avec une ligne sur laquelle le processeur a écrit la valeur « 0 » ;
- pendant la seconde partie T2 de l'intervalle de temps T, un état « forcé par le processeur », dans lequel la colonne prend la valeur logique « 0 » écrite par le processeur.

Dans l'exemple de la figure 3, la touche 6 (associée à la ligne LG1 et la colonne COL1) est appuyée. Donc, pour chacune des colonnes COL0 et COL2, le processeur lit la valeur logique « 1 » pendant chaque première partie T1 d'intervalle de temps T et écrit la valeur « 0 » pendant chaque seconde partie T2 d'intervalle de temps T. Pour la colonne COL1, le processeur agit de même sauf pour l'intervalle de temps T d'écriture sur la ligne LG1, pendant lequel le processeur lit la valeur logique « 0 » pendant la première partie T1 de cet intervalle de temps (car la ligne LG1 est en court-circuit avec la colonne COL1) et écrit la valeur « 0 » pendant la seconde partie T2 de cet intervalle de temps. On notera que, du fait que la touche 6 est appuyée, la valeur de la ligne LG1 suit celle la colonne COL1.

Un état « non forcé », pour une ligne ou colonne, correspond à un port du processeur connecté à cette ligne ou colonne et configuré en entrée, avec une résistance de tirage vers un état haut (« pull-up resistor » en anglais) ou bas (« pull-down resistor » en anglais), cette résistance de tirage fixant le niveau électrique.

Un état « forcé », pour une ligne ou colonne, correspond à un port du processeur connecté à cette ligne ou colonne et configuré en sortie, à un niveau logique « 1 » ou « 0 ».

La première contre-mesure présentée ci-dessus est vulnérable à une analyse détaillée des signaux présents sur les colonnes COL0 à COL2 puisqu'on peut noter que pour le couple (LG1, COL1), les fronts descendants sont synchrones, tandis que pour les autres couples (ligne, colonne) le front descendant du signal de colonne est décalé (de T1) par rapport au front descendant du signal de ligne.

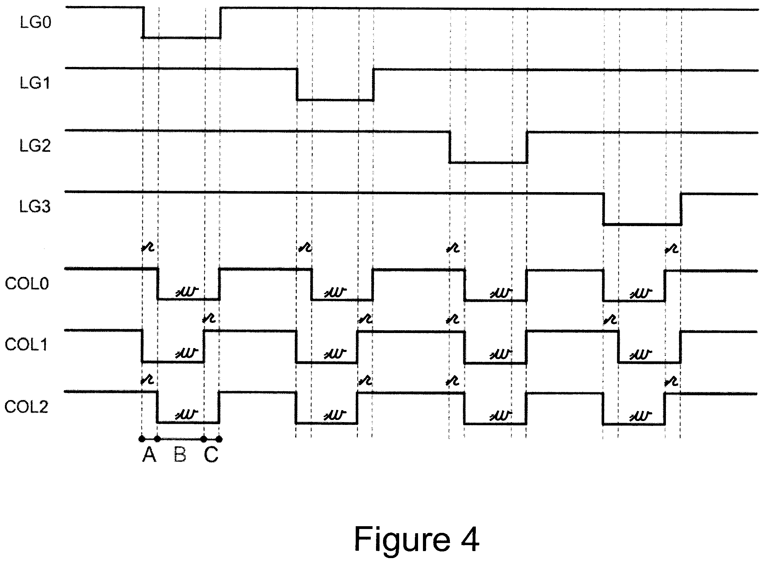

On présente maintenant, en relation avec les **figures 4****,** **5** **et** **6**, une combinaison de la première contre-mesure avec une deuxième contre-mesure, selon un mode de réalisation particulier de l'invention.

Afin de pallier à la faiblesse de la première contre-mesure, celle-ci est combinée avec la deuxième contre-mesure consistant, pour le processeur 10, à sélectionner de manière aléatoire l'ordre des opérations de lecture (pendant T1) et d'écriture (pendant T2), pour chaque colonne COL0 à COL2.

En outre, pendant chaque intervalle de temps T, la durée de T2 (écriture par le processeur) est identique pour toutes les colonnes.

Sur les figures 4, 5 et 6, chaque intervalle de temps T (écriture d'une impulsion d'interrogation sur une ligne) est décomposée en trois portions nommées A, B et C respectivement. Pour chaque colonne COL0 à COL2, on a soit : T1 = A et T2 = B + C (c'est-à-dire lecture en A et écriture en B et C), soit : T1 = C et T2 = A + B (c'est-à-dire lecture en C et écriture en A et B).

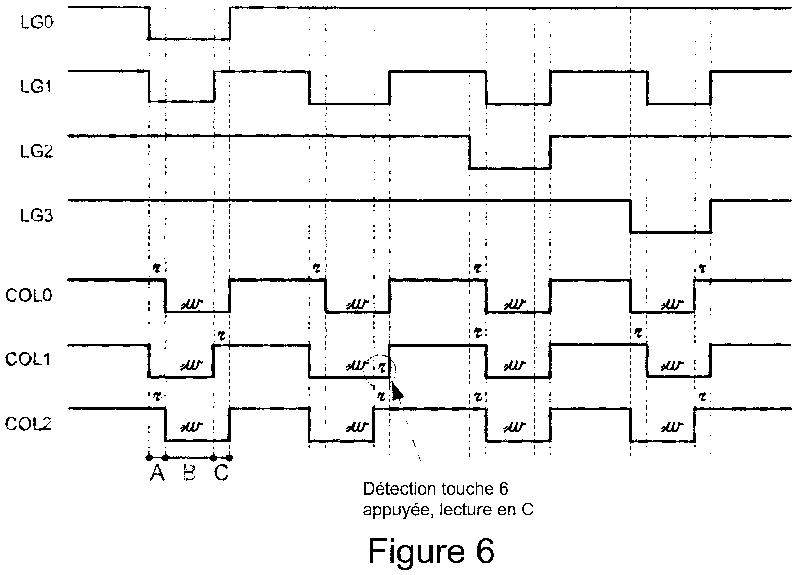

Dans l'exemple des figures 4 et 6, on a :
- T1 = A et T2 = B + C, pour les couples suivants : (LG0, COL0), (LG0, COL2), (LG1, COL0), (LG2, COL0), (LG2, COL1), (LG2, COL2) et (LG3, COL1) ;
- T1 = C et T2 = A + B, pour les couples suivants : (LG0, COL1), (LG1, COL1), (LG1, COL2), (LG3, COL0) et (LG3, COL2).

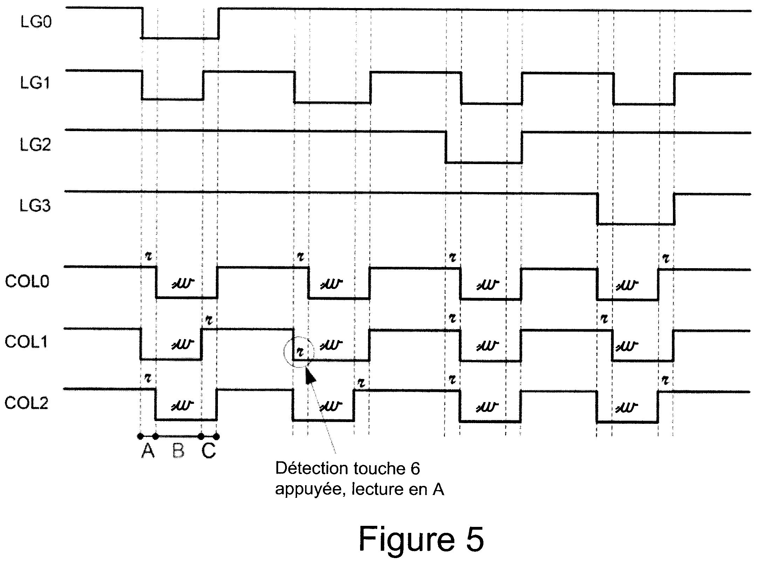

L'exemple de la figure 5 se distingue de celui des figures 4 et 6 uniquement pour le couple (LG1, COL1), pour lequel on a: T1 = A et T2 = B + C (c'est-à-dire lecture en A au lieu de lecture en C).

On fait les suppositions suivantes : aucune touche n'est appuyée, sur la figure 4. Sur la figure 5, la touche 6 est appuyée et est donc détectée dans la portion A. Sur la figure 6, la touche 6 est appuyée et est donc détectée dans la portion C.

On présente maintenant, en relation avec la **figure 7**, une troisième contre-mesure, selon un mode de réalisation particulier de l'invention. Elle peut être combinée avec la première contre-mesure (seule ou en combinaison avec l'une quelconque des autres contre-mesures).

Afin d'augmenter encore la complexité de l'analyse des signaux des colonnes, et rendre encore moins prévisible le procédé mis en oeuvre par le processeur, la troisième contre-mesure consiste à choisir de manière aléatoire l'ordre dans lequel le processeur écrit l'impulsion d'interrogation sur les lignes, à chaque itération de la phase de balayage.

Dans l'exemple de la figure 7, dans une première itération référencée 71, le processeur écrit sur les lignes dans l'ordre suivant : LG1, LG0, LG3 et LG2. Dans une autre itération référencée 72, le processeur écrit sur les lignes dans l'ordre suivant : LG2, LG1, LG3 et LG0.

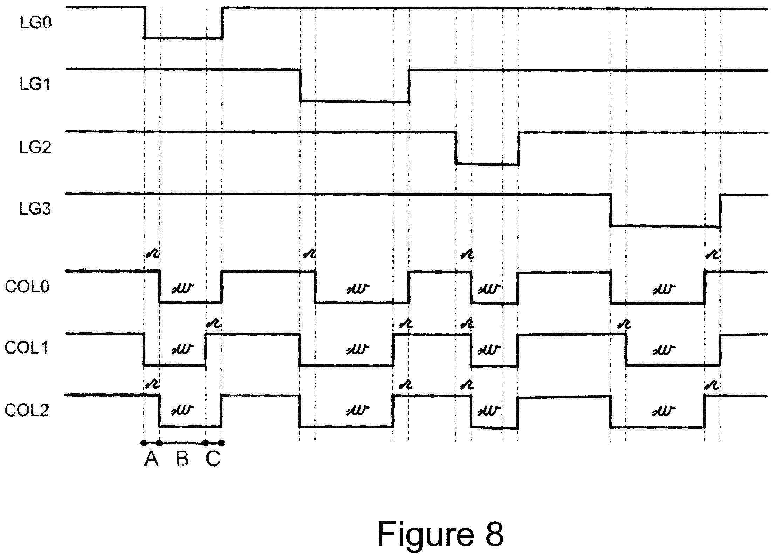

On présente maintenant, en relation avec la **figure 8**, une combinaison des première et deuxième contre-mesures avec une quatrième contre-mesure.

La quatrième contre-mesure consiste, pour le processeur, à faire varier de manière aléatoire, d'une ligne à l'autre, un ou plusieurs des paramètres suivants, à chaque itération de la phase de balayage :
- la durée de l'intervalle de temps prédéterminé T ;
- la durée de la première partie T1 (lecture par le processeur) de l'intervalle de temps T ; et
- la durée de la seconde partie T2 (écriture par le processeur) de l'intervalle de temps T.

On évite ainsi un espionnage avec déclenchement sur une largeur spécifique.

Dans l'exemple de la figure 8, seule la durée de la portion B varie de manière aléatoire, donc la durée de l'intervalle de temps prédéterminé T varie également de manière aléatoire (c'est également le cas de la durée de la seconde partie T2, puisque T2 est égal à A+B ou B+C). En revanche, la durée de la première partie T1 n'est pas variable dans cet exemple (puisque T1 est égal à A ou C).

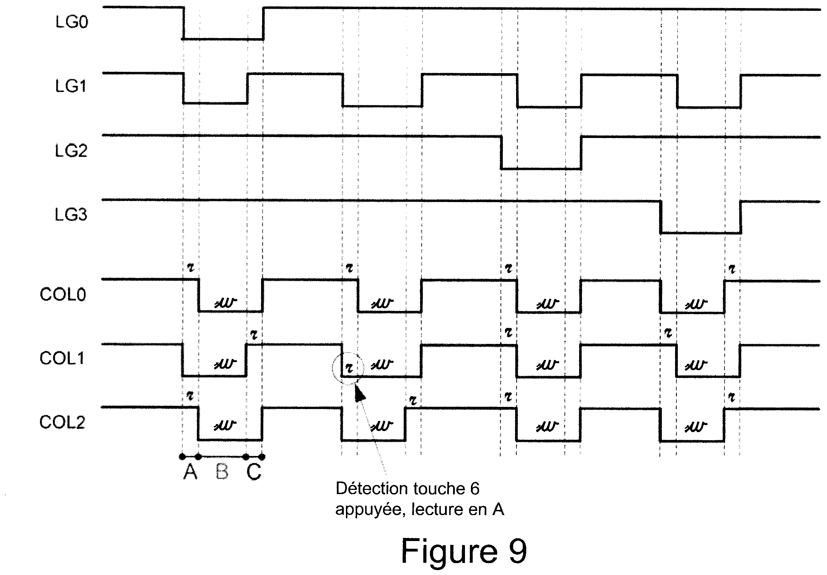

On présente maintenant, en relation avec les **figures 9****,** **10** **et** **11**, une combinaison des première et deuxième contre-mesures avec une cinquième contre-mesure, selon un mode de réalisation particulier de l'invention.

La cinquième contre-mesure consiste, dès lors qu'une touche appuyée a été détectée au cours d'une itération de la phase de balayage (appelée ci-après itération de détection d'appui), à cacher cette touche appuyée lors des itérations suivantes de la phase de balayage (appelées ci-après itérations de confirmation d'appui), jusqu'à une détection d'un relâchement de cette touche au cours d'une itération de la phase de balayage appelée ci-après itération de détection de relâchement.

La figure 9 présente un exemple d'une itération de détection d'appui, dans laquelle un appui sur la touche 6 est détecté (lecture en A de la valeur logique « 0 » puis écriture en B et C de la valeur logique « 0 », pour le couple (LG1, COL1)). Cette figure 9 est identique à la figure 5 et n'est pas décrite à nouveau.

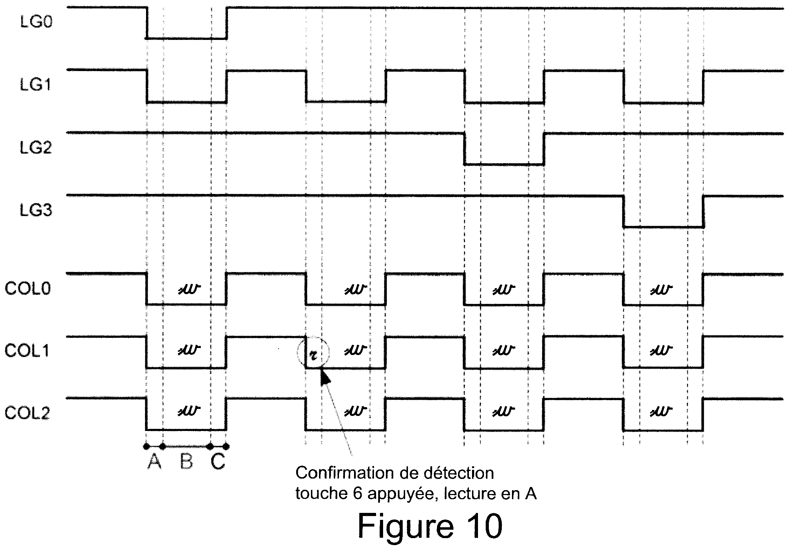

La figure 10 présente un exemple d'une itération de confirmation d'appui, dans laquelle l'appui sur la touche 6 est confirmé (pour le couple (LG1, COL1), lecture en A de la valeur logique « 0 » puis écriture de la valeur logique « 0 » en B et C, c'est-à-dire T1=A et T2=B+C). Afin de cacher l'appui sur cette touche 6, pour tous les autres couples (ligne, colonne), le processeur n'effectue aucune lecture sur les colonnes, mais effectue uniquement une écriture de la valeur logique « 0 » pendant toute la durée de l'intervalle de temps T de l'impulsion d'interrogation (écriture pendant A, B et C, c'est-à-dire T2=A+B+C=T). Ainsi, pour chaque intervalle de temps T, tous les signaux présents sur les différentes colonnes sont strictement identiques (valeur logique « 0 » pendant T).

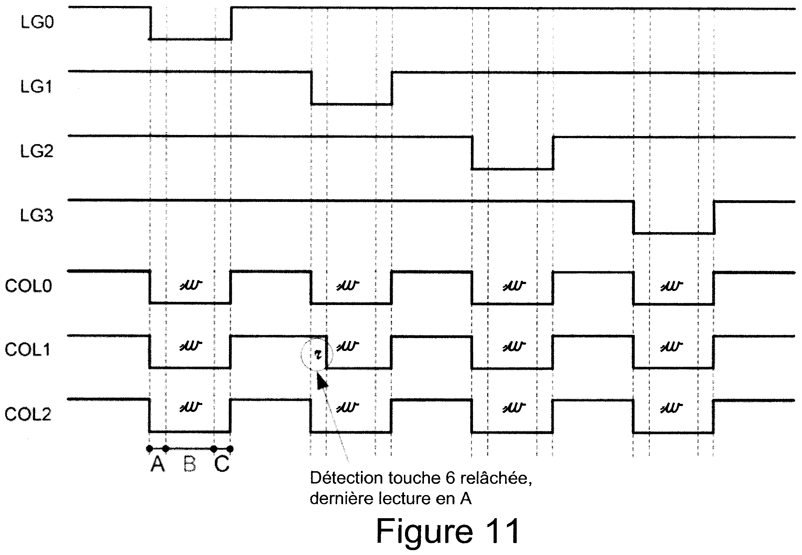

La figure 11 présente un exemple d'une itération de détection de relâchement, dans laquelle le relâchement de la touche 6 est détecté (pour le couple (LG1, COL1), lecture en A de la valeur logique « 1 » puis écriture de la valeur logique « 0 » en B et C, c'est-à-dire T1=A et T2=B+C).

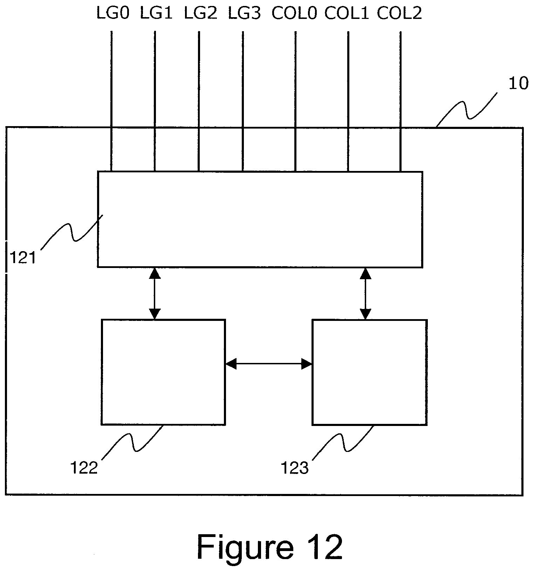

La **figure 12** présente la structure d'un dispositif 10 de gestion d'une matrice de touches d'un clavier, selon un mode de réalisation particulier de l'invention. Ce dispositif met en oeuvre les contre-mesures présentées ci-dessus, ou une combinaison de certaines d'entre elles.

Dans cet exemple, le dispositif comprend une mémoire RAM 123 (pour « Random Access Memory» en anglais), une unité de traitement 121 (ou CPU, pour « Central Processing Unit » en anglais), équipée par exemple d'un processeur et pilotée par un programme stocké dans une mémoire ROM 122 (pour « Read Only Memory » en anglais). A l'initialisation, les instructions de code du programme sont par exemple chargées dans la mémoire RAM 123 avant d'être exécutées par l'unité de traitement 121. L'unité de traitement 121 gère les signaux sur les lignes et les colonnes ((LG0 à LG3 et COL0 à COL2 dans cet exemple) de la matrice de touche du clavier, selon les instructions du programme 122, afin de mettre en oeuvre la totalité ou une partie des contre-mesures détaillées plus haut.

Cette figure 12 illustre seulement une manière particulière, parmi plusieurs possibles, de réaliser les différentes contre-mesures détaillées ci-dessus, en relation avec les figures 3 à 11. En effet, la technique de l'invention se réalise indifféremment :
- sur une machine de calcul reprogrammable (un processeur ou un microcontrôleur par exemple) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de gestion, par un dispositif (10), d'une matrice de touches comprenant au moins une ligne (LGO à LG3) et au moins deux colonnes (COL0 à COL2), chaque touche permettant, quand elle est pressée, de court-circuiter une ligne et une colonne de ladite matrice, le procédé comprenant au moins une itération d'une phase de balayage comprenant les étapes suivantes pour chacune des lignes traitées successivement :
- écriture d'une valeur logique prédéterminée sur la ligne ; et
- pour chaque colonne, lecture d'une valeur logique sur la colonne pour déterminer si la colonne est en court-circuit avec la ligne, par comparaison entre la valeur logique lue et la valeur logique prédéterminée,
**caractérisé en ce que**, pour chacune des lignes traitées successivement :
- l'étape d'écriture de la valeur logique prédéterminée sur la ligne est effectuée pendant un intervalle de temps prédéterminé (T) ;
- pendant ledit intervalle de temps prédéterminé (T), une étape d'exploration simultanée de toutes les touches associées à la même ligne comprenant, pour chacune desdites colonnes :
* l'étape de lecture d'une valeur logique sur la colonne est effectuée pendant une première partie (T1) dudit intervalle de temps prédéterminé (T) ;
* la phase de balayage comprend une étape supplémentaire d'écriture de la valeur logique prédéterminée sur la colonne, pendant une seconde partie (T2) dudit intervalle de temps prédéterminé (T), la durée dudit intervalle de temps prédéterminé (T) étant égale à la somme des durées des première et seconde parties.

2. Procédé selon la revendication 1, **caractérisé en ce que**, pour chaque colonne, l'ordre des étapes de lecture et d'écriture pendant l'intervalle de temps prédéterminé est sélectionné de manière aléatoire.

3. Procédé selon la revendication 2, **caractérisé en ce que**, dans chaque intervalle de temps prédéterminé, la durée de la seconde partie de l'intervalle de temps prédéterminé est identique pour toutes les colonnes.

4. Procédé selon l'une quelconque des revendications 1 à 3, **caractérisé en ce que** la matrice de touches comprend une pluralité de lignes, et **en ce que**, à chaque itération de la phase de balayage (71, 72), l'ordre de traitement successif des lignes est aléatoire.

5. Procédé selon l'une quelconque des revendications 1 à 4, **caractérisé en ce que** la matrice de touches comprend une pluralité de lignes, et **en ce que**, au cours d'une itération donnée de la phase de balayage, au moins un paramètre varie aléatoirement, d'une ligne à l'autre, ledit au moins paramètre appartenant au groupe comprenant :
- la durée de l'intervalle de temps prédéterminé ;
- la durée de la première partie de l'intervalle de temps prédéterminé ; et
- la durée de la seconde partie de l'intervalle de temps prédéterminé.

6. Procédé selon l'une quelconque des revendications 1 à 5, **caractérisé en ce qu'**au moins une itération de la phase de balayage, qui suit une itération pendant laquelle au moins un court-circuit a été déterminé entre une colonne donnée et une ligne donnée, comprend les étapes suivantes :
- pour chacune des lignes traitées successivement, autre qu'une ligne donnée en court-circuit avec une colonne donnée :
* pour chaque colonne, écriture de la valeur logique prédéterminée sur la colonne pendant toute la durée de l'intervalle de temps ;
- pour chaque ligne donnée en court-circuit avec une colonne donnée :
* pour chaque colonne autre que la colonne donnée, écriture de la valeur logique prédéterminée sur la colonne pendant toute la durée de l'intervalle de temps ; et
* pour la colonne donnée, lecture d'une valeur logique pendant la première partie de l'intervalle de temps, afin de détecter une poursuite ou un arrêt dudit court-circuit entre la colonne donnée et la ligne donnée, et écriture de la valeur logique prédéterminée pendant la seconde partie de l'intervalle de temps.

7. Produit programme d'ordinateur, comprenant des instructions de code de programme pour la mise en oeuvre du procédé selon au moins une des revendications 1 à 6, lorsque ledit programme est exécuté sur un ordinateur ou un processeur.

8. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 1 à 6.

9. Dispositif de gestion d'une matrice de touches comprenant au moins une ligne et au moins deux colonnes, chaque touche permettant, quand elle est pressée, de court-circuiter une ligne et une colonne de ladite matrice, le dispositif comprenant des moyens de balayage adaptés pour effectuer au moins une itération d'une phase de balayage, les moyens de balayage comprenant les moyens suivants, activés pour chacune des lignes traitées successivement :
- des moyens d'écriture d'une valeur logique prédéterminée sur la ligne ; et
- des moyens de lecture d'une valeur logique sur chaque colonne pour déterminer si la colonne est en court-circuit avec la ligne, par comparaison entre la valeur logique lue et la valeur logique prédéterminée,
**caractérisé en ce que** les moyens de balayage comprennent des moyens supplémentaires d'écriture,
et **en ce que**, pour chacune des lignes traitées successivement :
- les moyens d'écriture de la valeur logique prédéterminée sur la ligne sont activés pendant un intervalle de temps prédéterminé (T) ;
- pendant ledit intervalle de temps prédéterminé (T), une étape d'exploration simultanée de toutes les touches associées à la même ligne est activée et comprend, pour chacune desdites colonnes :
* les moyens de lecture d'une valeur logique sur la colonne sont activés pendant une première partie (T1) dudit intervalle de temps prédéterminé (T);
* les moyens supplémentaires d'écriture sont activés pendant une seconde partie (T2) dudit intervalle de temps prédéterminé (T), pour écrire la valeur logique prédéterminée sur la colonne, la durée de l'intervalle de temps prédéterminé étant égale à la somme des durées des première et seconde parties.

## Patentansprüche

1. Verfahren zur Verwaltung, durch eine Vorrichtung (10), einer Tastenmatrix, umfassend mindestens eine Zeile (LGO bis LG3) und mindestens zwei Spalten (COLO bis COL2), wobei es jede Taste, wenn sie gedrückt wird, ermöglicht, eine Zeile und eine Spalte der Matrix kurzzuschließen, wobei das Verfahren mindestens eine Iteration einer Abtastphase umfasst, umfassend die folgenden Schritte für jede der nacheinander bearbeiteten Zeilen:
- Schreiben eines vorbestimmten logischen Werts auf die Zeile; und
- für jede Spalte Ablesen eines logischen Werts auf der Spalte, um zu bestimmen, ob die Spalte mit der Zeile kurzgeschlossen ist, durch Vergleich zwischen dem abgelesenen logischen Wert und dem vorbestimmten logischen Wert,
**dadurch gekennzeichnet, dass** für jede der nacheinander bearbeiteten Zeilen:
- der Schritt des Schreibens des vorbestimmten logischen Werts auf die Zeile während eines vorbestimmten Zeitintervalls (T) erfolgt;
- während des vorbestimmten Zeitintervalls (T) ein Schritt der gleichzeitigen Erforschung aller derselben Zeile zugeordneten Tasten erfolgt, umfassend für jede der Spalten:
* den Schritt des Ablesens eines logischen Werts auf der Spalte während eines ersten Teils (T1) des vorbestimmten Zeitintervalls (T) ;
* wobei die Abtastphase einen zusätzlichen Schritt des Schreibens des vorbestimmten logischen Werts auf die Spalte während eines zweiten Teils (T2) des vorbestimmten Zeitintervalls (T) umfasst, wobei die Dauer des vorbestimmten Zeitintervalls (T) gleich der Summe der Dauern der ersten und zweiten Teile ist.

2. Verfahren nach Anspruch 1, **dadurch gekennzeichnet, dass** für jede Spalte die Reihenfolge der Schritte des Ablesens und Schreibens während des vorbestimmten Zeitintervalls zufällig gewählt wird.

3. Verfahren nach Anspruch 2, **dadurch gekennzeichnet, dass** in jedem vorbestimmten Zeitintervall die Dauer des zweiten Teils des vorbestimmten Zeitintervalls für alle Spalten identisch ist.

4. Verfahren nach einem der Ansprüche 1 bis 3, **dadurch gekennzeichnet, dass** die Tastenmatrix eine Vielzahl von Zeilen umfasst, und dass bei jeder Iteration der Abtastphase (71, 72) die Reihenfolge der aufeinanderfolgenden Bearbeitung der Zeilen zufällig ist.

5. Verfahren nach einem der Ansprüche 1 bis 4, **dadurch gekennzeichnet, dass** die Tastenmatrix eine Vielzahl von Zeilen umfasst, und dass während einer gegebenen Iteration der Abtastphase mindestens ein Parameter zufällig von einer Zeile zur anderen variiert, wobei der mindestens eine Parameter der Gruppe angehört, umfassend:
- die Dauer des vorbestimmten Zeitintervalls;
- die Dauer des ersten Teils des vorbestimmten Zeitintervalls; und
- die Dauer des zweiten Teils des vorbestimmten Zeitintervalls.

6. Verfahren nach einem der Ansprüche 1 bis 5, **dadurch gekennzeichnet, dass** mindestens eine Iteration der Abtastphase, die auf eine Iteration folgt, während der mindestens ein Kurzschluss zwischen einer gegebenen Spalte und einer gegebenen Zeile bestimmt wurde, die folgenden Schritte umfasst:
- für jede der nacheinander bearbeiteten Zeilen mit Ausnahme einer gegebenen Zeile, die mit einer gegebenen Spalte kurzgeschlossen ist:
* für jede Spalte Schreiben des vorbestimmten logischen Werts auf die Spalte währen der gesamten Dauer des Zeitintervalls;
- für jede gegebenen Zeile, die mit einer gegebenen Spalte kurzgeschlossen ist:
* für jede Spalte mit Ausnahme der gegebenen Spalte Schreiben des vorbestimmten logischen Werts auf die Spalte während der gesamten Dauer des Zeitintervalls; und
* für die gegebene Spalte Ablesen eines logischen Werts während des ersten Teils des Zeitintervalls, um eine Fortsetzung oder ein Einstellen des Kurzschlusses zwischen der gegebenen Spalte und der gegebenen Zeile zu erfassen, und Schreiben des vorbestimmten logischen Werts während des zweiten Teils des Zeitintervalls.

7. Computerprogrammprodukt, umfassend Programmcodeanweisungen für den Einsatz des Verfahrens nach mindestens einem der Ansprüche 1 bis 6, wenn das Programm auf einem Computer oder einem Prozessor ausgeführt wird.

8. Speichermedium, das von einem Computer lesbar und nicht transitorisch ist, das ein Computerprogramm speichert, umfassend einen Satz von von einem Computer oder Prozessor ausführbaren Anweisungen, um das Verfahren nach mindestens einem der Ansprüche 1 bis 6 einzusetzen.

9. Vorrichtung zur Verwaltung einer Tastenmatrix, umfassend mindestens eine Zeile und mindestens zwei Spalten, wobei es jede Taste, wenn sie gedrückt wird, ermöglicht, eine Zeile und eine Spalte der Matrix kurzzuschließen, wobei die Vorrichtung Abtastmittel umfasst, um mindestens eine Iteration einer Abtastphase durchzuführen, wobei die Abtastmittel die folgenden Mittel umfassen, die für jede der nacheinander bearbeiteten Zeilen aktiviert werden:
- Mittel zum Schreiben eines vorbestimmten logischen Werts auf die Zeile; und
- Mittel zum Ablesen eines logischen Werts auf jeder Spalte, um zu bestimmen, ob die Spalte mit der Zeile kurzgeschlossen ist, durch Vergleich zwischen dem abgelesenen logischen Wert und dem vorbestimmten logischen Wert,
**dadurch gekennzeichnet, dass** die Abtastmittel zusätzliche Schreibmittel umfassen,
und dass für jede der nacheinander bearbeiteten Zeilen:
- die Mittel zum Schreiben des vorbestimmten logischen Werts auf die Zeile während eines vorbestimmten Zeitintervalls (T) aktiviert werden;
- während des vorbestimmten Zeitintervalls (T) ein Schritt der gleichzeitigen Erforschung aller derselben Zeile zugeordneten Tasten aktiviert wird, umfassend für jede der Spalten:
* Aktivierung der Mittel zum Ablesen eines logischen Werts auf der Spalte während eines ersten Teils (T1) des vorbestimmten Zeitintervalls (T);
* wobei die zusätzlichen Schreibmittel während eines zweiten Teils (T2) des vorbestimmten Zeitintervalls (T) aktiviert werden, um den vorbestimmten logischen Wert auf die Spalte zu schreiben, wobei die Dauer des vorbestimmten Zeitintervalls gleich der Summe der Dauern der ersten und zweiten Teile ist.

## Claims

1. Method for the management, by a device (10), of a matrix of keys comprising at least one row (LG0 to LG3) and at least two columns (COL0 to COL2), each key making it possible, when it is pressed, to short-circuit a row and a column of said matrix, the method comprising at least one iteration of a scan phase comprising the following steps for each of the rows processed successively:
- writing a predetermined logic value to the row; and
- for each column, reading a logic value on the column to determine whether the column is short-circuited with the row, by comparison between the logic value read and the predetermined logic value,
**characterized in that**, for each of the rows processed successively:
- the step for writing the predetermined logic value to the row is performed during a predetermined time slot (T)) ;
- during said predetermined time slot (T), a step for explorating simultaneously all the keys associated with a same row comprising, for each of said columns:
* the step for reading a logic value on the column is performed during a first part (T1) of said predetermined time slot (T);
* the scan phase comprises an additional step for writing the predetermined logic value to the column during a second part (T2) of said predetermined time slot (T), the duration of said predetermined time slot (T) being equal to the sum of the durations of the first and second parts.

2. Method according to claim 1, **characterized in that**, for each column, the order of the steps for reading and writing during the predetermined time slot is selected randomly.

3. Method according to claim 2, **characterized in that**, in each predetermined time slot, the duration of the second part of the predetermined time slot is identical for all the columns.

4. Method according to any one of the claims 1 to 3, **characterized in that** the matrix of keys comprises a plurality of rows and, at each iteration of the scan phase (71, 72), the order of successive processing of the rows is random.

5. Method according to any one of the claims 1 to 4, **characterized in that** the matrix of keys comprises a plurality of rows and, **in that**, during a given iteration of the scan phase, at least one parameter varies randomly from one row to the other, said at least one parameter belonging to the group comprising:
- the duration of the predetermined time slot;
- the duration of the first part of the predetermined time slot; and
- the duration of the second part of the predetermined time slot.

6. Method according to any one of the claims 1 to 5, **characterized in that**, at least one iteration of the scan phase, which follows an iteration during which at least one short-circuit has been determined between a given column and a given row, comprises the following steps:
- for each of the successively processed rows, other than a given row that is short-circuited with a given column:
* for each column, writing the predetermined logic value to the column throughout the duration of the time slot;
- for each given row short-circuited with a given column:
* for each column other than the given column, writing the predetermined logic value to the column throughout the duration of the time slot; and
* for the given column, reading a logic value during the first part of the time slot in order to detect a continuing or a stopping of said short-circuit between the given column and the given row, and writing the predetermined logic value during the second part of the time slot.

7. Computer program product comprising program code instructions for implementing the method according to any one of the claims 1 to 6, when said program is executed on a computer or a processor.

8. Computer-readable and non-transient storage medium storing a computer program comprising a set of instructions executable by a computer or a processor to implement the method according to any one of the claims 1 to 6.

9. Device for managing a matrix of keys comprising at least one row and at least two columns, each key making it possible, when it is pressed, to short-circuit a row and a column of said matrix, the device comprising means for scanning adapted to carrying out at least one iteration of a scan phase, the means for scanning comprising the following means, activated for each of the rows processed successively:
- means for writing a predetermined logic value to the row; and
- means for reading a logic value on each column to determine whether the column is shorted-circuited with the row, by comparison between the logic value read and the predetermined logic value,
**characterized in that** the means for scanning comprise additional means for writing,
and **in that**, for each of the rows processed successively:
- the means for writing the predetermined logic value to the row are activated during a predetermined time slot (T);
- during said predetermined time slot (T), a step for explorating simultaneously all the keys associated with a same row is activated and comprises, for each of said columns:
* the means for reading the logic value on the column are activated during a first part (T1) of said predetermined time slot (T);
* the additional means for writing are activated during a second part (T2) of said predetermined time slot (T) to write the predetermined logic value to the column, the duration of the predetermined time slot being equal to the sum of durations of the first and second parts.
